(19) **Europäisches Patentamt**

**European Patent Office**

**Office européen des brevets**

(11) **EP 0 810 712 B1**

(12) **EUROPÄISCHE PATENTSCHRIFT**

(45) Veröffentlichungstag und Bekanntmachung des Hinweises auf die Patenterteilung:
**12.10.2005 Patentblatt 2005/41**

(51) Int Cl.⁷: **H02J 3/01**, H02J 3/18, H02M 1/12

(21) Anmeldenummer: **97108463.7**

(22) Anmeldetag: **26.05.1997**

(54) **Schaltungsanordnung zur geregelten Einspeisung**

Circuit arrangement for controlled injection

Montage pour l'injection contrôlée

(84) Benannte Vertragsstaaten:
**AT CH DE ES FR GB IT LI SE**

(30) Priorität: **29.05.1996 DE 29609558 U**

(43) Veröffentlichungstag der Anmeldung:
**03.12.1997 Patentblatt 1997/49**

(73) Patentinhaber: **SIEMENS AKTIENGESELLSCHAFT**
**80333 München (DE)**

(72) Erfinder:
• **Göpfrich, Kurt Dipl.-Ing.**
**91058 Erlangen (DE)**

• **Imrich, Franz Dipl.-Ing. (FH)**
**91058 Erlangen (DE)**

(56) Entgegenhaltungen:
**GB-A- 2 294 165          US-A- 5 297 014**

• **PRASAD A R ET AL: "AN ACTIVE POWER FACTOR CORRECTION TECHNIQUE FOR THREE-PHASE DIODE RECTIFIERS" IEEE TRANSACTIONS ON POWER ELECTRONICS, Bd. 6, Nr. 1, 1. Januar 1991, Seiten 83-92, XP000175322**

**Beschreibung**

Die Erfindung betrifft eine Schaltungsanordnung zur geregelten Einspeisung zum Betrieb an einem Drehstromnetz.

Für die Einspeisung der Energie vom Stromnetz in einen Spannungskreis, beispielsweise einen Zwischenkreis eines Umrichters, kann im einfachsten Fall ein Gleichrichter verwendet werden. Zum Verringern von Stromspitzen wird üblicherweise eine Kommutierungsdrossel auf den Gleichrichter folgend in eine oder beiden Phasen der gleichgerichteten Spannung eingesetzt. Als Spannungsspeicher zum Halten der gewünschten Ausgangsspannung wird herkömmlicherweise ein Kondensator eingesetzt.

Eine solche herkömmliche Anordnung zur geregelten Einspeisung besitzt jedoch die Nachteile, daß hohe Stromspitzen auftreten können, die im Gleichrichter zum Einsatz gelangenden Dioden auch für solche Stromspitzen ausgelegt sein müssen und dementsprechend sehr kostenaufwendig sind, da Stromspitzen erst auf Seiten der gleichgerichteten Spannung begrenzt werden. Hinzu kommt, daß keine geregelte Ausgangsspannung, im Falle eines Umrichters keine geregelte Zwischenkreisspannung, vorliegt. Darüber hinaus ist die Ausgangsspannung netzabhängig, d.h. das sie Netzschwankungen unterworfen ist.

PRASAD A R ET AL: "AN ACTIVE POWER FACTOR CORRECTION TECHNIQUE FOR THREE-PHASE DIODE RECTIFIERS" IEEE TRANSACTIONS ON POWER ELECTRONICS, Bd. 6, Nr. 1, 1. Januar 1991 (1991-01-01), Seiten 83-92, XP000175322 offenbart eine Schaltungsanordnung mit den Merkmalen des Oberbegriffs des Anspruchs 1.

Aufgabe der vorliegenden Erfindung ist es daher, eine Schaltungsanordnung zur geregelten Einspeisung zu schaffen, welche an einem Drehstromnetz betrieben werden kann und bei der hohe Stromspitzen so begrenzt werden, daß günstige Standarddioden zum Einsatz gelangen können. Darüber hinaus soll die Ausgangsspannung geregelt werden können und netzunabhängig sein, also gegen Netzschwankungen unempfindlich sein.

Gemäß der Erfindung wird diese Aufgabe durch eine Schaltungsanordnung mit folgenden Elementen gelöst:

1.1 es ist ein ungesteuerter Stromrichter mit Mitteln zum Gleichrichten der Netzspannung vorgesehen,
1.2 es ist ein Spannungskreis mit einem Energiespeicher zur Aufnahme der gleichgerichteten Spannung vorgesehen,
1.3 es sind Mittel zum Erfassen des Stromistwertes im Spannungskreis vorgesehen,
1.4 es sind Mittel zur Strombegrenzung vorgesehen,
1.5 es ist ein Mittel zum Kurzschluß des gesamten Netzes zwischen dem Stromrichter und dem Energiespeicher des Spannungskreises zum Aufbau von Energie im Netz vorgesehen,
1.6 es sind Mittel zum Regeln der in dem Energiespeicher eingespeicherten Spannung durch Beeinflussung des Mittels zum Kurzschluß des gesamten Netzes vorgesehen, denen ein Spannungssollwert als Führungsgröße und der Spannungsistwert als Regelgröße dient.

In einer ersten vorteilhaften Ausgestaltung der Schaltungsanordnung gemäß der vorliegenden Erfindung wird darüber hinaus erreicht, daß bei Überschreiten eines maximal zulässigen Stromes eine Zwangsabschaltung vorgenommen wird. Dies wird durch eine Schaltungsanordnung mit folgendem weiteren Merkmal erreicht:

2.1 es ist ein Mittel zum Zwangsabschalten des Mittels zum Kurzschluß des gesamten Netzes bei Überschreiten eines maximal zulässigen Stromes durch den Stromistwert vorgesehen.

In einer weiteren vorteilhaften Ausgestaltung der Schaltungsanordnung gemäß der vorliegenden Erfindung wird erreicht, daß Spannungsspitzen bereits vor der Gleichrichtung begrenzt werden, wodurch sich in der Schaltungsanordnung auch herkömmliche kostengünstige Bauelemente einsetzen lassen, welche nicht speziell für hohe Spannungsspitzen ausgelegt sein müssen. Dies wird durch folgendes weiteres Merkmal erreicht:

3.1 dem Stromrichter ist in jeder Phase je eine Kommutierungsdrossel vorgeschaltet.

In einer weiteren vorteilhaften Ausgestaltung der Schaltungsanordnung gemäß der vorliegenden Erfindung werden die Schaltelemente durch besonders geeignete elektronische Bauelemente realisiert. Dies geschieht durch folgende weitere Merkmale:

4.1 die Mittel zum Gleichrichten sind als Dioden ausgeprägt,
4.2 das Mittel zum Kurzschluß ist als Transistor, bevorzugterweise als IGBT-Transistor ausgeprägt,
4.3 der Energiespeicher ist mittels eines Kondensators realisiert,
4.4 als Mittel zum Regeln der Spannung des Energiespeichers dient ein PI-Regler, welcher auf einen Pulsweitenmodulator zur Ansteuerung des Transistors einwirkt.

Weitere Vorteile und erfinderische Einzelheiten ergeben sich aus der nachfolgenden Beschreibung eines Ausführungsbeispiels anhand der Zeichnung und in Verbindung mit den Unteransprüchen. Es zeigt:

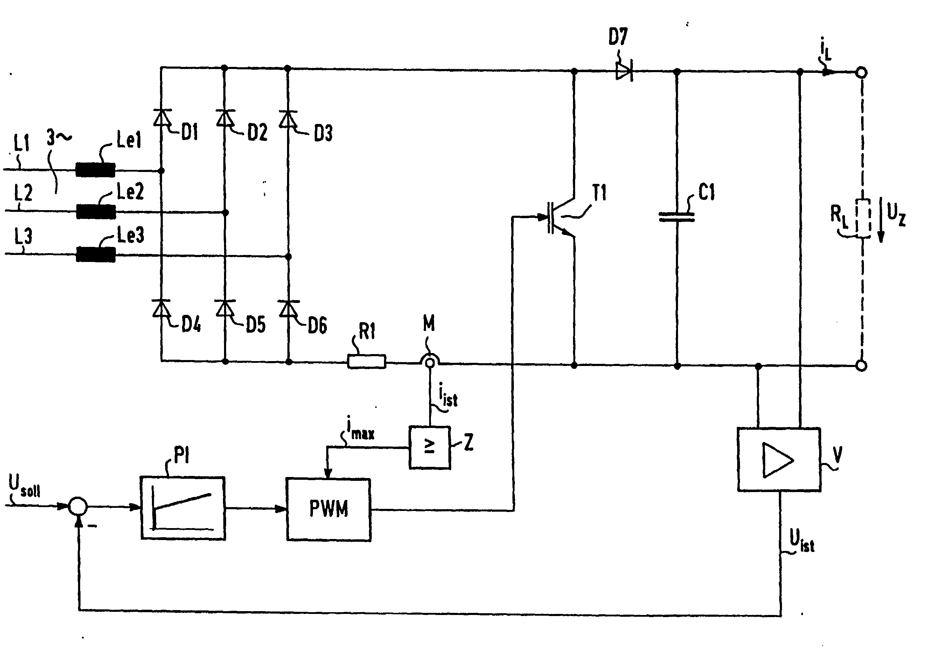

FIG 1     eine Schaltungsanordnung zur geregelten Einspeisung zum Betrieb an einen Drehstromnetz.

In der Darstellung gemäß FIG 1 ist eine Schaltungsanordnung zur geregelten Einspeisung gezeigt, welche zum Betrieb an einem Drehstromnetz mit den Phasen L1, L2 und L3 geeignet ist. Eingangsseitig weist die Schaltungsanordnung in jeder der Phasen eine Kommutierungsdrossel Le1, Le2 und Le3 auf. Herkömmlicherweise sind solche Kommutierungsdrosseln erst nach dem Gleichrichter angeordnet. Dies hat jedoch den Nachteil, daß der Gleichrichter für auftretende Spannungsspitzen ausgelegt sein muß. Dies bedingt den Einsatz erheblich teurerer Bauelemente für den Gleichrichter. Durch die Anordnung der Kommutierungsdrosseln vor dem Gleichrichter werden solche Spannungsspitzen bereits eingangsseitig begrenzt. Den Kommutierungsdrosseln folgt eine Gleichrichteranordnung für Drehstromnetze, welche im Ausführungsbeispiel durch Dioden in Dreiphasen-Brücken-Gleichrichterschaltung (6-Puls-Brückenschaltung P6) gebildet wird. Auf den Gleichrichter folgend ist ein Transistor T1 zwischen den positiven und negativen Anschluß der gleichgerichteten Spannung geschaltet. Dieser Transistor T1 ist vorzugsweise als IGBT-Transistor (Insulated Gate Bipolar Transistor) ausgeprägt.

Über eine weitere Diode D7, welche in Flußrichtung in den positiven Spannungszweig geschaltet ist, d.h. anodenseitig mit dem Kollektor des Transistors T1 verbunden ist, ist ein Kondensator C1 zwischen Dioden D7 und Emitter des Transistors T1 geschaltet. Parallel zum Kondensator C1 ist beispielhaft ein Lastwiderstand $R_1$ in gestrichelter Form angedeutet, welcher exemplarisch für eine beliebige Last stehen soll. Über den Widerstand $R_L$ fällt die Spannung $U_Z$ ab. Diese Ausgangsspannung $U_Z$ wird desweiteren über einen Verstärker V verstärkt und als Spannungsistwert $U_{ist}$ bereitgestellt. Dieser wird zum Regeln der Ausgangsspannung verwendet.

Dazu wird eingangsseitig ein Spannungssollwert $U_{soll}$ vorgegeben. Die Differenz zwischen Spannungssollwert $U_{soll}$ und Spannungsistwert $U_{ist}$ wird einem PI-Regler PI zugeführt, dessen Ausgangssignal einen Pulsweitenmodulator PWM ansteuert. Mit Hilfe der von diesem Pulsweitenmodulator PWM generierten Ausgangssignale wird der Transistor T1 angesteuert, indem der Ausgang des Pulsweitenmodulators PWM an die Basis des Transistors T1 geführt ist. Zwischen Gleichrichter und Transistor T1 ist, im vorliegenden Ausführungsbeispiel im negativen Stromzweig, ein Strombegrenzungswiderstand R1 geschaltet. über ein Meßglied M wird der durch diesen Strombegrenzungswiderstand R1 fließende Stromistwert $_{ist}$ erfaßt und einer Vergleicherschaltung zur Zwangsabschaltung Z zugeführt. Diese Zwangsabschaltung generiert bei Überschreiten des maximal zulässigen Stromes $i_{max}$ ein Signal zur Ansteuerung des Pulsweitenmodulators PWM. Bei Überschreiten des zulässigen maximalen Stromes

$i_{max}$ wird der Pulsweitenmodulator somit zwangsabgeschaltet.

Beim Einschalten des Transistors T1 wird das Netz über die Dioden D1 bis D6 kurzgeschlossen. Setzt man für den Transistor T1 einen idealen Schalter voraus, so gilt:

$$U_Z = U_e = 0V$$

für eine Spannungsmessung gegen den Stern Mp, wobei $U_e$ die Eingangsspannung bezeichnet.

Der Spannungsabfall an den Wicklungen der jeweiligen Kommutierungsdrossel Le1 bis Le3 entspricht somit der jeweiligen Strangspannung der Phasen L1 bis L3. unter der Voraussetzung einer idealen Drossel (unter anderem stromunabhängiger Induktivitätsverlauf) entspricht also der Stromanstieg pro Zeiteinheit dem Wert der jeweiligen Strangspannung. Beim Ausschalten des Transistors T1 fließt dann der "Freilaufstrom" über die Diode D7 und den Kondensator C1 weiter. Dadurch wird der Kondensator C1 aufgeladen.

Zum Regeln der Ausgangsspannung wird ein PI-Regler PI verwendet. Dieser wird eingangsseitig durch die Differenz aus Spannungssollwert $U_{soll}$ und Spannungsistwert $U_{ist}$ angesteuert. Der PI-Regler PI wiederum wirkt auf einen Pulsweitenmodulator PWM ein, durch dessen Ausgangsignale der Transistor T1 entsprechend des Puls-Pausen-Verhältnisses geschaltet wird. Wird das Netz durch den Transistor T1 über die Dioden D1 bis D6 kurzgeschlossen, so wird Energie in den Drosseln Le1, Le2 und Le3 aufgebaut, die bei Abschalten des Transistors T1 über die Diode D7 den Kondensator C1 auflädt. Durch eine geeignete Ansteuerung des Transistors T1 kann somit der Spannungswert über dem Kondensator C1 stets konstant gehalten werden. Abhängig von der ausgangsseitigen Last wird der Transistor T1 über das Puls-Pausen-Verhältnis vom Pulsweitenmodulator PWM so angesteuert, daß stets genügend Energie in den Drosseln aufgebaut wird, die zum Laden des Kondensators C1 zur Verfügung steht.

Über den Strombegrenzungswiderstand R1 wird der Stromistwert $i_{ist}$ ermittelt und mit einem maximal zulässigen Strom $i_{max}$ verglichen. Wird dieser maximale Strom erreicht oder auch überschritten, so wird über eine Zwangsabschaltung Z der Pulsweitenmodulator PWM so beeinflußt und somit der Transistor T1 so gesteuert, daß der Strom im zulässigen Rahmen gehalten wird.

**Patentansprüche**

1. Schaltungsanordnung zur geregelten Einspeisung zum Betrieb an einem Drehstromnetz (L1,L2,L3) mit folgenden Elementen:

   1.1 es ist ein ungesteuerter Stromrichter mit Mitteln zum Gleichrichten (D1...D6) der Netzspannung vorgesehen,

1.2 es ist ein Spannungskreis mit einem Energiespeicher (C1) zur Aufnahme der gleichgerichteten Spannung vorgesehen,

1.3 es sind Mittel (M) zum Erfassen des Stromistwertes (Ii) im Spannungskreis vorgesehen,

1.4 es sind Mittel (R1) zur Strombegrenzung vorgesehen,

1.5 es ist ein Mittel (T1) zum Kurzschluß des gesamten Netzes zwischen dem Stromrichter und dem Energiespeicher (C1) des Spannungskreises zum Aufbau von Energie im Netz vorgesehen, **gekennzeichnet durch** folgende Elemente:

1.6 es sind Mittel (PI, PWM) zum Regeln der in dem Energiespeicher (C1) eingespeicherten Spannung (Uz) **durch** Beeinflussung des Mittels (T1) zum Kurzschluß des gesamten Netzes vorgesehen, denen ein Spannungssollwert (U$_{soll}$) als Führungsgröße und der Spannungsistwert (U$_{ist}$) als Regelgröße dient.

2. Schaltungsanordnung nach Anspruch 1, mit folgendem weiteren Merkmal:

   2.1 es ist ein Mittel (Z) zum Zwangsabschalten des Mittels (T1) zum Kurzschluß des gesamten Netzes bei Überschreiten eines maximal zulässigen Stromes (i$_{max}$) durch den Stromistwert (i$_{ist}$) vorgesehen.

3. Schaltungsanordnung nach Anspruch 1 oder 2, mit folgendem weiteren Merkmal:

   3.1 dem Stromrichter ist in jeder Phase (L1... L3) je eine Kommutierungsdrossel (Le1...Le3) vorgeschaltet.

4. Schaltungsanordnung nach einem der vorangehenden Ansprüche, mit folgenden weiteren Merkmalen:

   4.1 die Mittel zum Gleichrichten (D1...D6) sind als Dioden ausgeprägt,

   4.2 das Mittel zum Kurzschluß ist als Transistor (T1), bevorzugterweise als IGBT-Transistor ausgeprägt,

   4.3 der Energiespeicher ist mittels eines Kondensators (C1) realisiert,

   4.4 als Mittel zum Regeln der Spannung des Energiespeichers (C1) dient ein PI-Regler (PI), welcher auf einen Pulsweitenmodulator (PWM) zur Ansteuerung des Transistors (T1) einwirkt.

**Claims**

1. Circuit arrangement for controlled injection for operation on a three-phase supply network (L1, L2, L3) with the following elements:

   1.1 An uncontrolled power converter is provided with means for rectifying (D1 ... D6) the network voltage,

   1.2 A voltage circuit is provided with an energy store (C1) to receive the rectified voltage,

   1.3 Means (M) are provided to detect the actual current value (Ii) in the voltage circuit,

   1.4 Means (R1) are provided to limit the current,

   1.5 Means (T1) are provided to short-circuit the entire network between the power converter and the energy store (C1) of the voltage circuit to accumulate energy in the network, **characterised by** the following elements:

   1.6 Means (PI, PWM) are provided to control the voltage (Uz) stored in the energy store (C1) by influencing the means (T1) to short-circuit the entire network, for which a target voltage value (U$_{soll}$) serves as a reference variable and the actual voltage value (U$_{ist}$) serves as a control variable.

2. Circuit arrangement according to claim 1, with the following further feature:

   2.1 Means (Z) are provided for forced disconnection of the means (T1) to short-circuit the entire network if the actual current value (i$_{ist}$) exceeds a maximum permitted current (i$_{max}$).

3. Circuit arrangement according to claim 1 or 2, with the following further feature:

   3.1 A commutating reactor (Le1 ... Le3) is connected upstream of the power converter in every phase (L1 ... L3).

4. Circuit arrangement according to one of the preceding claims, with the following further features:

   4.1 The rectification means (D1 ... D6) have the characteristics of diodes,

   4.2 The short-circuit means have the characteristics of a transistor (T1), preferably an IGBT transistor,

   4.3 The energy store is provided by means of a capacitor (C1),

   4.4 A PI regulator (PI), which influences a pulse width modulator (PWM) to activate the transistor (T1), serves as the means for controlling the voltage of the energy store (C1).

## Revendications

1. Montage pour l'alimentation régulée en vue d'un fonctionnement sur un réseau triphasé (L1, L2, L3) comprenant les éléments suivants :

   1.1 il est prévu un convertisseur non commandé avec des moyens pour redresser (D1 à D6) la tension de réseau,
   1.2 il est prévu un circuit de tension ayant un accumulateur d'énergie (C1) pour recevoir la tension redressée,
   1.3 il est prévu des moyens (M) pour détecter la valeur réelle de courant (Ii) dans le circuit de tension,
   1.4 il est prévu des moyens (R1) pour limiter le courant,
   1.5 il est prévu un moyen (T1) pour court-circuiter l'ensemble du réseau entre le convertisseur et l'accumulateur d'énergie (C1) du circuit de tension en vue de l'accumulation d'énergie dans le réseau,
   **caractérisé par** les éléments suivants :
   1.6 il est prévu des moyens (PI, PWM) pour réguler la tension ($U_z$) stockée dans l'accumulateur d'énergie (C1) en influençant le moyen (T1) destiné à court-circuiter l'ensemble du réseau, une valeur de consigne de tension ($U_{soll}$) servant de grandeur de commande et la valeur réelle de tension ($U_{ist}$) servant de grandeur commandée pour ces moyens de régulation.

2. Montage selon la revendication 1, avec l'autre caractéristique suivante :

   2.1 il est prévu un moyen (Z) pour la coupure forcée du moyen (T1) destiné à court-circuiter l'ensemble du réseau lorsque la valeur réelle de courant ($i_{ist}$) dépasse un courant maximal autorisé ($i_{max}$).

3. Montage selon la revendication 1 ou 2, avec l'autre caractéristique suivante :

   3.1 dans chaque phase (L1 à L3), une self de commutation (Le1 à Le3) est branchée du côté amont du convertisseur.

4. Montage selon l'une des revendications précédentes, avec les autres caractéristiques suivantes :

   4.1 les moyens pour le redressement (D1 à D6) sont réalisés comme des diodes,
   4.2 le moyen pour le court-circuit est réalisé comme un transistor (T1), de préférence un transistor IGBT,
   4.3 l'accumulateur d'énergie est réalisé au moyen d'un condensateur (C1),
   4.4 comme moyen pour la régulation de la tension de l'accumulateur d'énergie (C1), on utilise un régulateur PI (PI) qui agit sur un modulateur de largeur d'impulsion (PWM) pour la commande du transistor (T1).